# FASCICULE DE BREVET EUROPEEN

(11) **EP 1 782 398 B1**
(45) Date de publication et mention de la délivrance du brevet: **07.08.2019**
(21) Numéro de dépôt: 05779719.3
(22) Date de dépôt: 24.06.2005
(51) Int. Cl.: G07F 7/10, G07F 19/00, H01Q 1/24

(54) **DISPOSITIF PORTATIF AVEC ANTENNE ET MAINTIEN D'UN SUPPORT D'IMPRESSION**
TRAGBARE VORRICHTUNG MIT ANTENNE UND DRUCKTRÄGERSCHICHT
PORTABLE DEVICE WITH ANTENNA AND PRINTING SUBSTRATE SUPPORT

(30) Priorité: 24.06.2004 FR 0406899
(43) Date de publication de la demande: 09.05.2007
(73) Titulaire: INGENICO GROUP, 75015 Paris (FR)
(72) Inventeur: LARINIER, Claude, F-26750 Génissieux (FR)
(74) Mandataire: Vidon Brevets & Stratégie
(86) Numéro de dépôt international: PCT/FR2005/001599
(87) Numéro de publication internationale: WO 2006/010832

(56) Documents cités:
- EP-A- 1 260 947
- EP-A- 1 289 050
- WO-A-98/58510
- FR-A- 2 836 266
- FR-A1- 2 704 986
- US-A- 6 028 555
- US-B1- 6 366 261

## Description

### DOMAINE TECHNIQUE GENERAL

La présente invention concerne un dispositif portatif comportant un compartiment de réception d'un support d'impression et au moins une antenne d'émission/réception comportant une partie rayonnante.

Plus précisément, elle concerne un dispositif portatif formant terminal de paiement par carte bancaire.

### ETAT DE L'ART

On connaît de nombreux dispositifs portatifs comportant un compartiment de réception d'un support d'impression et au moins une antenne d'émission/réception comportant une partie rayonnante et une masse dans le dispositif.

Un exemple de dispositif portatif susmentionné est un terminal de paiement par carte bancaire.

Un tel terminal de paiement est utilisé dans les magasins, les restaurants, etc. et permet à un client d'effectuer une opération de paiement par carte bancaire.

Le terminal comporte à cet effet principalement un boîtier portatif avec un lecteur de carte à puce, un processeur permettant notamment de gérer les données de la carte à puce en relation avec les transactions bancaires, une imprimante et un support d'impression pour émettre une facture, ainsi qu'une antenne d'émission/réception pour un échange de données avec les serveurs bancaires. Selon la technologie radio utilisée, l'échange peut soit utiliser directement les réseaux de téléphonie mobile disponibles (cas du GSM/DCS/PCS), soit nécessiter l'utilisation d'une base additionnelle (cas du protocole de la technologie sans fil « Bluetooth ») qui véhiculera les données sur le réseau téléphonique filaire (RTC).

La tendance actuelle est l'ajout de fonctions et d'options de plus en plus nombreuses sur les terminaux de paiement, ainsi que l'utilisation de protocoles d'échange de plus en plus modernes entre le terminal et le serveur bancaire.

On souhaite ainsi effectuer des échanges selon notamment le protocole du système mondial de communications mobiles GSM ou « Global System for Mobile communications » ou selon le protocole du service général de radiocommunication par paquets GPRS ou « General Packet Radio Service » selon la terminologie anglo-saxonne généralement utilisée par l'homme du métier, en utilisant les standards radio GSM, DCS 1800 MHz (« Digital Communication System 1800 MHz ») et PCS 1900 MHz (« Personal Communications Services 1900 MHz»)

L'ajout des fonctions et l'utilisation des nouveaux protocoles d'échange s'effectuent notamment au détriment de la compacité du terminal.

Ainsi, les terminaux de paiement de l'état de la technique comportent des antennes d'échange externes au boitier principal du terminal. Ils peuvent également comporter des antennes internes au boitier mais s'étendant sous forme de barreau sur toute ou partie de la longueur du boîtier (antenne filaire quart d'onde, hélicoïdale, cadre...), comme par exemple dans le document de brevet EP1260947.

De telles antennes augmentent l'encombrement spatial du terminal puisque l'antenne est elle-même encombrante.

De plus, dans le cas des antennes internes, les performances des antennes sont diminuées du fait de leur proximité avec des composants électroniques.

### PRESENTATION DE L'INVENTION

L'invention propose de pallier ces inconvénients.

Un des buts de l'invention est de proposer un dispositif portatif comportant un compartiment de réception d'un support d'impression et au mains une antenne d'émission/réception comportant une partie rayonnante reliée à une masse, l'encombrement spatial du dispositif étant réduit par rapport aux dispositifs de l'état de l'art.

Un des buts de l'invention est de proposer un dispositif portatif permettant des échanges avec des protocoles modernes, notamment selon le protocoles GSM/GPRS selon les standards radio GSM et/ou DCS 1800/PCS 1900 et/ou les protocoles de la technologie sans fil « Bluetooth » et/ou les protocoles d'un réseau local sans fil « WiFi ».

Un des autres buts de l'invention est de proposer un dispositif portatif dont les performances de l'antenne sont améliorées par rapport aux dispositifs de l'art antérieur.

A cet effet, l'invention propose un dispositif portatif selon la revendication 1.

L'invention est avantageusement complétée par les caractéristiques suivantes, prises seules ou en une quelconque de leur combinaison techniquement possible :
- l'antenne comporte un monopole sur circuit imprimé ;
- la plaque de maintien est une pièce rapportée et amovible sur une armature de réception du support d'impression, la plaque et l'armature assembles formant, dans le compartiment de réception, un ensemble de maintien du support d'impression ;
- les fréquences d'émission/réception de l'antenne sont égales ou supérieures à 900 MHz;
- l'antenne est apte à émettre et recevoir sur des fréquences d'utilisation correspondant aux protocoles GSM/GPRS (standard radio GSM, DCS,PCS) et/ou aux protocoles de la technologie sans fil « Bluetooth » et/ou aux protocoles d'un réseau local sans fil « WiFi » ;
- une partie d'une masse de l'antenne est située sur un circuit imprime distant en dehors du compartiment de réception du support d'impression, la liaison entre le circuit imprime distant et la partie de la masse située dans le compartiment de réception du support d'impression s'effectuant par un connecteur à broches ;

### PRESENTATION DES FIGURES

D'autres caractéristiques, buts et avantages de l'invention ressortiront de la description qui suit, qui est purement illustrative et non limitative, et qui doit être lue en regard des dessins annexes sur lesquels :
- la figure 1 représente schématiquement un exemple d'un dispositif portatif selon l'invention ;
- la figure 2 représente schématiquement un exemple d'un dispositif ou la partie rayonnante de l'antenne est située dans le compartiment à proximité du support d'impression ;
- la figure 3 représente schématiquement la localisation d'un circuit imprime sur lequel est située la partie rayonnante de l'antenne ;
- la figure 4 montre une plaque de réception de l'antenne ;
- les figures 5 à 8 montrent schématiquement une antenne monte sur un circuit imprime ; et
- la figure 9 montre schématiquement une extension de la masse de l'antenne en dehors du compartiment de réception du support d'impression.

Dans l'ensemble des dessins, les éléments similaires portent des références numériques identiques.

### DESCRIPTION DETAILLEE

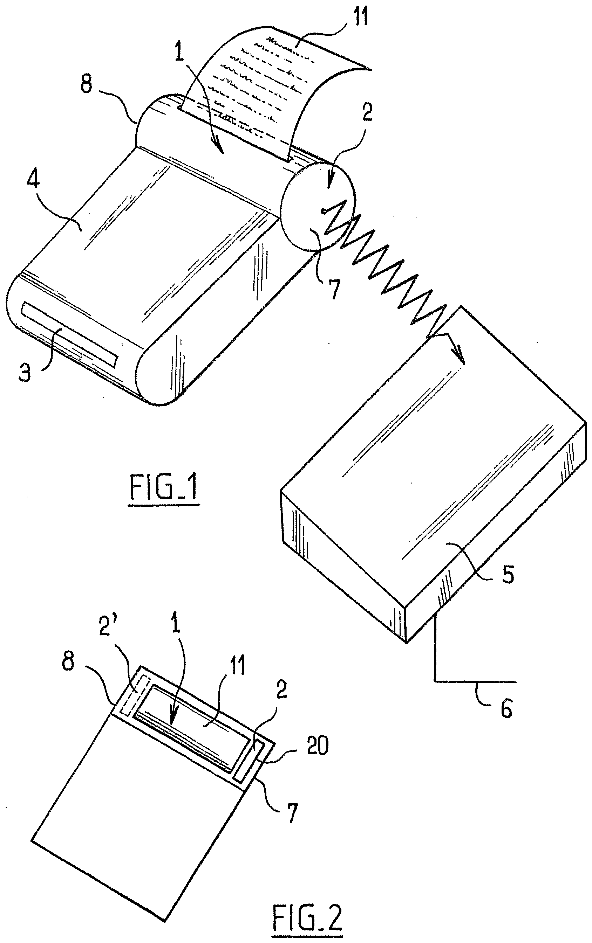

La figure 1 représente schématiquement un exemple d'un dispositif portatif comportant un compartiment 1 de réception d'un support 11 d'impression et au moins une antenne 2 d'émission/réception.
- On distingue sur la figure 1 que le compartiment 1 de réception est situe dans un boitier 4 du dispositif, le compartiment 1 de réception étant

Préférentiellement, l'antenne 2 comporte un monopôle sur circuit imprimé.

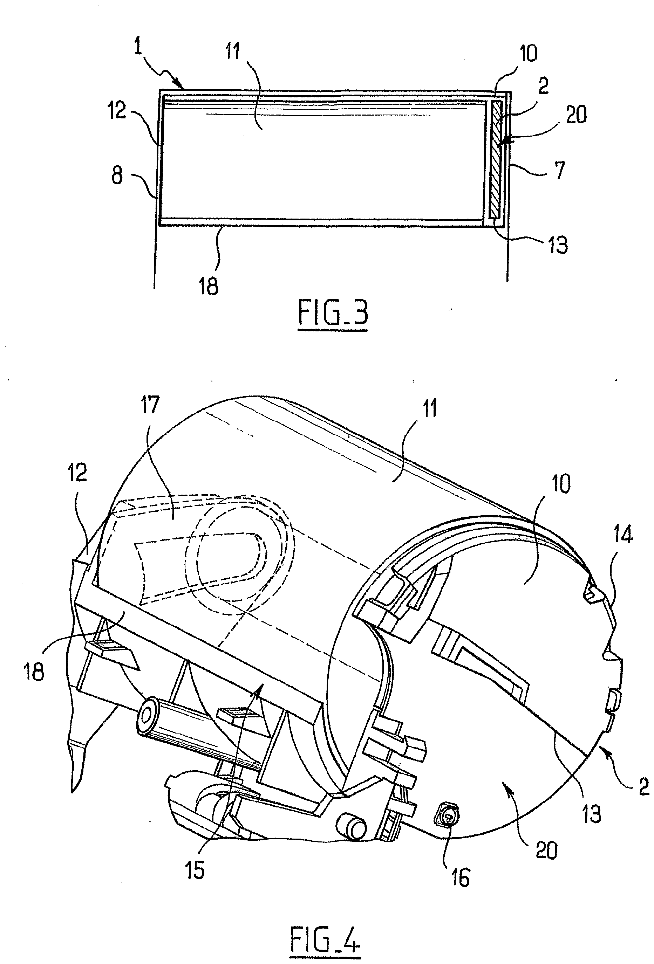

Selon l'invention, et comme le montre la figure 3, le circuit imprimé sur lequel est située la partie rayonnante 20 de l'antenne 2 est disposé dans un logement de réception 13 d'une plaque 10 dans le compartiment 1. Le logement 13 est complémentaire du circuit imprimé de l'antenne.

Avantageusement, la plaque 10 est en contact avec le support d'impression 11 une fois que ledit support 11 est en place dans le compartiment. La plaque 10 assure ainsi la double fonction de logement du circuit imprimé de l'antenne 2 et de maintien du support 11 d'impression dans le compartiment 1. On a ainsi un gain de place, ce qui favorise l'encombrement spatial réduit du dispositif.

La figure 4 montre que, pour faciliter l'insertion du circuit imprimé 20 dans la plaque 10 et son montage à l'intérieur du boîtier 4, la plaque 10 est une pièce rapportée et amovible sur une armature 12 de réception du support 11 d'impression. La fixation de la plaque 10 s'effectue préférentiellement par clipsage.

L'armature 12 est une pièce dont la partie centrale 18 possède une surface intérieure qui est complémentaire de la surface externe du support 11 d'impression. L'armature 12 comporte de plus une extrémité 17 perpendiculaire à la partie centrale 18, qui permet le maintien du support d'impression une fois en place dans le compartiment 1.

La plaque 10 une fois en place est donc perpendiculaire à la partie centrale 18 et parallèle à l'extrémité 17.

La plaque 10 et l'armature 12 assemblées forment, dans le compartiment de réception, un ensemble 15 de maintien du support 11 d'impression.

La plaque 10 est préférentiellement en matière plastique, réalisée dans la même matière que toutes les autres pièces du boîtier 4 et de l'armature 12.

Avantageusement, le compartiment 1 est apte à recevoir un rouleau de papier.

Comme le montre la figure 4, le rouleau 11 est placé entre d'une part l'extrémité 17 et d'autre part la plaque 10 de l'ensemble 15 pour assurer son maintien longitudinal. La partie centrale 18 de l'armature 12 assure son maintien radial. Un couvercle du boîtier 4 permet de maintenir le rouleau dans le dispositif.

Selon l'invention, la plaque 10 de maintien a au moins partiellement un contour extérieur 14 semi circulaire. Le diamètre du contour 14 est égal au diamètre maximal du rouleau 11 de papier une fois en place. Ceci permet d'assurer un maintien longitudinal efficace du rouleau 11, tout en assurant un encombrement spatial réduit.

La plaque peut se composer de deux parties reliées entre elles, par exemple par clipsage, collage, etc. ou être formé d'un bloc. Elle comporte préférentiellement une semelle formant support de l'antenne et en contact avec le support d'impression, et un capot, de surface moins importante que la semelle, pour faciliter l'insertion et l'extraction de l'antenne dans la plaque. Le logement est pratiqué entre la semelle et le capot de la plaque 10.

Avantageusement, le circuit imprimé 20 de l'antenne 2 a également au moins partiellement un contour extérieur semi circulaire dont le diamètre est égal au diamètre maximal du rouleau 11 de papier une fois en place. Le circuit imprimé s'insère donc parfaitement dans le logement 13 de la plaque 10. On maximise de plus l'espace d'intégration de l'antenne dans le volume technique du boîtier du dispositif.

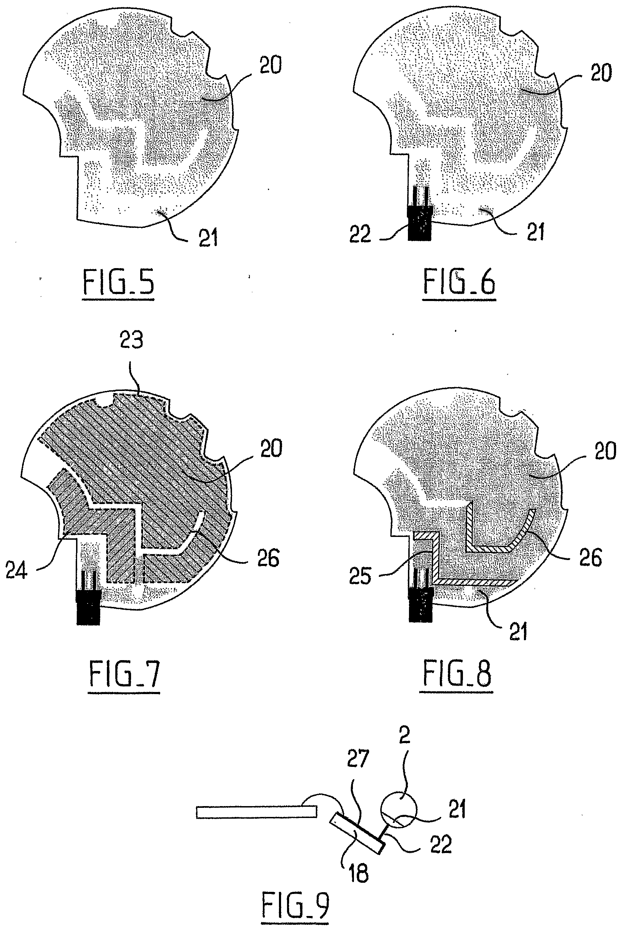

On va maintenant décrire plus précisément l'antenne 2 en référence aux figures 5 à 8.

Préférentiellement, la partie rayonnante 20 et une partie au moins de la masse 21 de l'antenne sont inscrites sur une plaque de circuit imprimé. Le circuit imprimé est préférentiellement simple face.

L'excitation de l'antenne est réalisée via un câble coaxial (non représenté) entre la partie rayonnante 20 et la masse 21. Le connecteur 16 du câble coaxial sur le circuit imprimé est visible sur la figure 4.

Les fréquences d'émission/réception de l'antenne 2 sont égales ou supérieures à 900 MHz. Ainsi, l'antenne 2 est apte à émettre et recevoir sur des fréquences d'utilisation correspondant aux protocoles GSM/GPRS et/ou aux protocoles de la technologie sans fil « Bluetooth » et/ou aux protocoles d'un réseau local sans fil « WiFi ».

On s'attache dans les développements qui suivent à un fonctionnement tribande GSM, DCS/PCS.

L'obtention d'un bon fonctionnement de l'antenne, en ce qui concerne son efficacité et sa bande passante, suppose l'utilisation d'un plan de masse de référence dont la longueur soit au moins supérieure à un quart de la longueur d'onde d'utilisation.

Dans le cas d'une antenne d'un terminal de paiement et pour les fréquences du GSM (900 MHz), on ajoute une masse supplémentaire 27 à la masse 21 présente sur le circuit imprimé.

La masse supplémentaire 27 est située sur un circuit imprimé distant en dehors du compartiment 1 de réception du support d'impression.

On peut par exemple utiliser comme partie 27 la masse d'une carte principale du terminal de paiement. La liaison entre le circuit imprimé distant et la partie de la masse 21 située dans le compartiment 1 s'effectue par un connecteur 22 à broches visible à la figure 6.

Le fonctionnement tribande (GSM, DCS/PCS) est obtenu par le biais d'une fente 26 séparant le motif du monopôle en deux parties distinctes représentant le chemin GSM 23 et le chemin DCS/PCS 24. Les dimensions physiques des deux rubans conducteurs 23 et 24 sont sensiblement d'un quart de longueur d'onde guidée à la fréquence d'utilisation (900 MHZ pour le GSM, 1800 MHz pour le DCS/PCS).

La longueur d'onde guidée permet de prendre en compte le circuit imprimé de l'antenne, la plaque 10 - préférentiellement formant le capot plastique qui constitue le radom protecteur de l'antenne, ainsi que le rouleau 11 de papier dont la proximité a une influence non négligeable sur l'antenne. Ces trois éléments sont donc pris en compte dans l'accord de l'antenne 2.

L'accord en fréquence du monopôle est réalisé en modifiant la longueur du ruban 24 pour le DCS/PCS et en modifiant la longueur de la fente 26 pour le GSM.

L'adaptation de l'antenne dans les trois bandes de fréquences visées (GSM, DCS/PCS) est obtenue en modifiant la largeur de la fente 25 séparant le monopôle 20 de la masse 21. Les paramètres de réglage sont relativement indépendants les uns des autres, ce qui simplifie le réglage de la structure.

Les développements qui précèdent s'appliquent avantageusement à une plaque de réception d'un circuit imprimé d'une antenne surfacique, la plaque formant un élément en contact avec le support 11 d'impression une fois qu'il est en place dans le compartiment 1.

On comprend que les parties rayonnantes des autres types d'antennes surfaciques, comme les antennes PIFA ou flexibles par exemple, peuvent également être disposées dans un élément en contact avec le support 11 d'impression une fois qu'il est en place dans le compartiment 1. L'élément peut ainsi être d'une part une plaque similaire à la plaque décrite dans les développements qui précèdent ou d'autre part l'armature de maintien du support 11, par exemple la partie centrale 18 des figures.

## Revendications

1. Dispositif portatif comportant un compartiment (1) de réception d'un support (11) d'impression et au moins une antenne surfacique (2) d'émission/réception comportant une partie rayonnante (20) située dans le compartiment (1) de réception du support d'impression, ledit dispositif portatif comportant en outre des moyens pour former un terminal de paiement par carte bancaire et le support (11) d'impression étant un rouleau de papier (11), **caractérisé en ce que** ladite partie rayonnante (20) est située sur un circuit imprimé, le circuit imprimé étant disposé dans un logement (13) de réception ménagé dans une plaque (10) de maintien, ladite plaque (10) de maintien étant en contact avec le rouleau (11) de papier une fois qu'il est en place pour assurer le maintien du rouleau (11) de papier dans le compartiment (1), la plaque (10) de maintien ayant au moins partiellement un contour extérieur semi circulaire dont le diamètre est sensiblement égal au diamètre maximal du rouleau (11) de papier une fois en place, et **en ce que** le circuit imprimé de l'antenne (2) a au moins partiellement un contour extérieur semi circulaire dont le diamètre est égal au diamètre maximal du rouleau (11) de papier une fois en place.

2. Dispositif selon la revendication 1, **caractérisé en ce que** l'antenne (2) comporte un monopôle sur ledit circuit imprimé.

3. Dispositif selon la revendication 1, **caractérisé en ce que** la plaque (10) de maintien est une pièce rapportée et amovible sur une armature (12) de réception du rouleau (11) de papier, la plaque (10) et l'armature assemblés formant, dans le compartiment de réception, un ensemble (15) de maintien du rouleau (11) de papier.

4. Dispositif selon l'une des revendications 1 à 3, **caractérisé en ce que** les fréquences d'émission/réception de l'antenne (2) sont égales ou supérieures à 900 MHz

5. Dispositif selon la revendication 4, **caractérisé en ce que** l'antenne (2) est apte à émettre et recevoir sur des fréquences d'utilisation correspondant aux protocoles GSM/GPRS (standard radio GSM, DCS, PCS) et/ou aux protocoles d'un réseau local sans fil « Bluetooth » et/ou aux protocoles d'un réseau local sans fil « WiFi ».

6. Dispositif selon l'une des revendications 1 à 5, **caractérisé en ce qu'**une partie (27) d'une masse (21) de l'antenne (2) est située sur un circuit imprimé distant en dehors du compartiment (1) de réception du support d'impression, la liaison entre le circuit imprimé distant et la partie de la masse (21) située dans le compartiment de réception du rouleau (11) de papier s'effectuant par un connecteur (22) à broches.

## Patentansprüche

1. Tragbare Vorrichtung, umfassend ein Fach (1) zum Aufnehmen eines Druckträgers (11) und mindestens eine Flächenantenne (2) zum Senden/Empfangen, die einen Strahlungsteil (20) aufweist, der sich im Fach (1) zum Aufnehmen des Druckträgers befindet, wobei die tragbare Vorrichtung ferner Mittel aufweist, um ein Endgerät zum Zahlen per Bankkarte zu bilden, und wobei der Druckträger (11) eine Papierrolle (11) ist, **dadurch gekennzeichnet, dass** sich der Strahlungsteil (20) auf einer gedruckten Schaltung befindet, wobei die gedruckte Schaltung in einem Aufnahmegehäuse (13) angeordnet ist, das in einer Halteplatte (10) ausgebildet ist, wobei die Halteplatte (10) mit der Papierrolle (11) in Kontakt ist, sobald sie in Position ist, um das Halten der Papierrolle (11) im Fach (1) zu gewährleisten, wobei die Halteplatte (10) mindestens teilweise eine halbkreisförmige Außenkontur aufweist, deren Durchmesser im Wesentlichen gleich dem maximalen Durchmesser der Papierrolle (11) ist, sobald sie in Position ist, und dadurch, dass die gedruckte Schaltung der Antenne (2) mindestens teilweise eine halbkreisförmige Außenkontur aufweist, deren Durchmesser gleich dem maximalen Durchmesser der Papierrolle (11) ist, sobald sie in Position ist.

2. Vorrichtung nach Anspruch 1, **dadurch gekennzeichnet, dass** die Antenne (2) ein Monopol auf der gedruckten Schaltung aufweist.

3. Vorrichtung nach Anspruch 1, **dadurch gekennzeichnet, dass** die Halteplatte (10) ein Bauteil ist, das auf einem Gestell (12) zum Aufnehmen der Papierrolle (11) aufgesetzt und davon abnehmbar ist, wobei die Platte (10) und das Gestell, die zusammengefügt sind, in dem Fach zum Aufnahmen eine Anordnung (15) zum Halten der Papierrolle (11) bilden.

4. Vorrichtung nach einem der Ansprüche 1 bis 3, **dadurch gekennzeichnet, dass** die Sende-/Empfangsfrequenzen der Antenne (2) höher als oder gleich 900 MHz sind.

5. Vorrichtung nach Anspruch 4, **dadurch gekennzeichnet, dass** die Antenne (2) geeignet ist, Nutzungsfrequenzen zu senden und zu empfangen, die den GSM/GPRS-Protokollen (GSM-, DCS-, PCS-Funkstandard) und/oder den Protokollen eines drahtlosen lokalen "Bluetooth"-Netzwerks und/oder den Protokollen eines drahtlosen lokalen "WiFi"-Netzwerks entsprechen.

6. Vorrichtung nach einem der Ansprüche 1 bis 5, **dadurch gekennzeichnet, dass** sich ein Teil (27) einer Masse (21) der Antenne (2) auf einer entfernten gedruckten Schaltung außerhalb des Fachs (1) zum Aufnehmen des Druckträgers befindet, wobei die Verbindung zwischen der entfernten gedruckten Schaltung und dem Teil der Masse (21), der sich im Fach zum Aufnahmen der Papierrolle (11) befindet, durch einen Stiftverbinder (22) erstellt wird.

## Claims

1. Portable device comprising a compartment (1) for receiving a print medium (11) and at least one transmitting/receiving surface antenna (2) comprising a radiating part (20) located in the compartment (1) for receiving the print medium, the portable device further comprising means for providing a bank card payment terminal and the print medium (11) being a paper roll (11), **characterised in that** the radiating portion (20) is located on a printed circuit, the printed circuit being arranged in a receiving housing (13) provided in a holding plate (10), the holding plate (10) being in contact with the paper roll (11) once it has been fitted to secure the paper roll (11) in the compartment (1), the holding plate (10) having at least partially a semi-circular outer contour, the diameter of which is substantially equal to the maximum diameter of the paper roll once (11) it has been set up, and **in that** the printed circuit of the antenna has at least partially a semi-circular outer contour, the diameter of which is equal to the maximum diameter of the paper roll (11) once it has been fitted.

2. Device according to claim 1, **characterised in that** the antenna (2) comprises a monopole on the printed circuit.

3. Device according to claim 1, **characterised in that** the holding plate (10) is a removable insert on a support (12) for receiving the paper roll (11), the assembled plate (10) and support forming, in the receiving compartment, an assembly (15) for securing the paper roll (11).

4. Device according to any one of claims 1 to 3, **characterised in that** the transmitting/receiving frequencies of the antennas (2) are equal to or greater than 900MHz.

5. Device according to claim 4, **characterised in that** the antenna (2) is capable of transmitting and receiving on frequencies of use corresponding to GSM/GPRS protocols (standard radio GSM, DCS, PCS) and/or protocols of a Bluetooth wireless local-area network and/or protocols of a Wi-Fi wireless local-area network.

6. Device according to any one of claims 1 to 5, **characterised in that** a portion (27) of a ground (21) of the antenna (2) is located on a remote printed circuit outside the receiving compartment (1) of the print media, the connection between the remote printed circuit and the portion of the ground (21) located in the receiving compartment of the paper roll (11) being performed by a pin connector (22).
